# EUROPEAN PATENT APPLICATION

(11) **EP 4 738 291 A1**
(43) Date of publication of application: **06.05.2026**
(21) Application number: 24209375.5
(22) Date of filing: 29.10.2024
(51) Int. Cl.: G06V 20/58

(54) **METHODS AND SYSTEMS FOR OBJECT DETECTION**

(71) Applicant: Aptiv Technologies AG, 8200 Schaffhausen (CH)
(72) Inventor: HAHN, Lukas, 8200 Schaffhausen (CH); PAUS, Andre, 8200 Schaffhausen (CH); FRIEDRICHS, Klaus, 8200 Schaffhausen (CH)
(74) Representative: Manitz Finsterwald Patent- und Rechtsanwaltspartnerschaft mbB

(57) **Abstract**

A computer implemented method for object detection comprises the following steps carried out by computer hardware components: acquiring an image of an environment; determining at least one reflection in the image, the at least one reflection being at least one reflection of a light source of an occluded object; determining enhanced reflection information based on the at least one reflection; and detecting the occluded objected based on the enhanced reflection information.

## Description

### FIELD

The present disclosure relates to methods and systems for object detection.

### BACKGROUND

Advanced driver-assistance systems (ADAS) may be desired to be capable of detecting other traffic participants reliably and over larger distances. Occlusion of the direct line of sight however may become an issue, as it makes all state-of-the-art sensors, like lidar, radar and camera, become blind. This might lead to hazardous situations as objects might appear suddenly and users can generally be led to put too much trust in assistance systems when not being able to understand their (physical) capabilities.

Accordingly, there is a need to provide enhanced methods and systems for object detection.

### SUMMARY

The present disclosure provides a computer implemented method, a computer system, a vehicle and a non-transitory computer readable medium according to the independent claims. Embodiments are given in the subclaims, the description and the drawings.

In one aspect, the present disclosure is directed at a computer implemented method for object detection, the method comprising the following steps carried out by computer hardware components: acquiring an image of an environment; determining at least one reflection in the image, the at least one reflection being at least one reflection of a light source of an occluded object; determining enhanced reflection information based on the at least one reflection; and detecting the occluded objected based on the enhanced reflection information.

In other words, headlight reflections may be used to detect occluded vehicles.

According to various embodiments, the occluded object may include or may be a vehicle.

Reflection may be understood as the change in direction of an optical wavefront at an interface between two different media (for example between air and a parked vehicle) so that the wavefront returns into the medium from which it originated.

According to an embodiment, the enhanced reflection information comprises a pattern of a plurality of reflections, and the occluded object is detected based on the pattern. The pattern may include features such as pixel brightness, and/ or reflection area, and/ or pixel color values, and/ or reflection motion relative to the reflecting body.

According to an embodiment, the enhanced reflection information comprises information on a change of the reflection over time, and the occluded object is detected based on the change. For example, if the reflection over time increases in intensity, this may be considered as indicating that the reflection is related to an approaching object.

According to an embodiment, the computer implemented method further comprises the following steps carried out by the computer hardware components: detecting a visible object in the environment; and determining whether the visible object is a static object; wherein the at least one reflection comprises at least one reflection on the determined visible object if it is determined that the visible object is a static object. Reflections on a static object may solely change due to a relative movement between the observer (for example an ego-vehicle) and an occluded object.

According to an embodiment, determining whether the visible object is a static object comprises determining an image of the visible object and/ or Lidar measurements related to the visible object and/ or radar measurements related to the visible object. Based on the image and/or Lidar/ radar measurements, it may be determined whether the visible object is moving or not.

According to an embodiment, determining whether the visible object is a static object comprises determining an orientation of the visible object. For example, for visible objects being a vehicle, it may be determined that the visible object is moving if the vehicle is oriented perpendicular to the forward direction of the ego-vehicle, since this may indicate that the visible object is turning onto the road on which the ego-vehicle is driving.

According to an embodiment, the computer implemented method further comprises the following steps carried out by the computer hardware components: determining situation information; determining whether the computer implemented method is to be carried out based on the situation information; and carrying out the computer implemented method only if it is determined that the computer implemented method is to be carried out. It has been found that executing the method only under certain circumstances reduces computational effort, in particular in situations where the result of the object detection is not necessary.

According to an embodiment, the situation information comprises at least one of a daytime information, an environment traffic situation, a road width information, or a visibility information.

According to an embodiment, the computer implemented method further comprises the following steps carried out by the computer hardware components: determining tracking information of the at least one reflection; wherein the enhanced reflection information is determined based on the tracking information. Using not only a single reflection but several reflections over different time steps, in particular a tracking information on the reflections, for example a trajectory of the reflections, may increase detection accuracy.

According to an embodiment, the method is carried out in relation to an ego-vehicle, and the method further comprises at least one of the following steps carried out by the computer hardware components: outputting a warning to a driver of the ego-vehicle based on detecting the occluded object; or influencing a planning algorithm of an autonomous driving function of the ego-vehicle to reduce the risk of collision with the occluded object. For example, if an occluded object is detected, a warning about the occluded object may be provided to the driver of the ego-vehicle, or a trajectory of the ego-vehicle may be changed so that a collision between the ego-vehicle and the occluded object is avoided.

According to an embodiment, detecting the occluded object comprises determining at least one of a distance of the occluded object, a velocity of the occluded object, or a direction of movement of the occluded object.

According to an embodiment, the method is carried out in relation to an ego-vehicle, and the method further comprising the following step carried out by the computer hardware components: determining a risk of collision between the ego-vehicle and the occluded object based on detecting the occluded object.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein and a sensor configured to acquire the image.

In another aspect, the present disclosure is directed at a non-transitory computer readable medium comprising instructions for carrying out (in other words: comprising instructions which, when executed by a computer system, for example by the computer system described herein, make the computer system carry out) several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a system according to various embodiments for detecting occluded vehicles based on headlight reflections according to various embodiments.
- Fig. 2: an illustration of a scene depicting an example for a bottleneck situation;
- Fig. 3: an illustration of an output of a bright spot detector/tracker on the same scene as shown in Fig. 2;
- Fig. 4: a flow diagram 400 illustrating a method for object detection according to various embodiments; and
- Fig. 5: a computer system with a plurality of computer hardware components configured to carry out steps of a computer implemented method for object detection according to various embodiments.

### DETAILED DESCRIPTION

Advanced driver-assistance systems (ADAS) may be desired to be capable of detecting other traffic participants reliably and over larger distances. Occlusion of the direct line of sight however may become an issue, as it makes all state-of-the-art sensors, like lidar, radar and camera, become blind. This might lead to hazardous situations as objects might appear suddenly and users can generally be led to put too much trust in assistance systems when not being able to understand their (physical) capabilities.

To overcome the problem of drivers switching to low beam too late and thus blinding the oncoming driver or not using high beam at all to avoid blinding other drivers, presently used automatic high beam algorithms evaluate a camera image to detect head and taillights of other vehicles and to be able to switch to low beam without requiring the driver to react manually quickly. But to avoid false positives and switching too often, these algorithms must wait for several frames of sight on headlights to gain high confidence in the classification. During this time the other driver will be blinded.

According to various embodiments, a method for object detection is provided which, like many human drivers, can anticipate other vehicles by paying attention to observing indirect light scattering, for example by realizing that the road is getting lit by a not yet visible vehicle.

According to various embodiments, methods and systems are provided which leverage headlight reflections on parked vehicles to estimate occluded oncoming traffic participants to handle bottlenecks and similar scenarios for autonomous driving in urban areas. This may provide the ability to decelerate / stop at bottlenecks, intersections (planning / policy), one-lane-tunnels and prevent deadlock situations, may increase safety, may increase comfort for passengers (for example without abrupt deceleration, less often requiring the driver to take over scenario because autonomous system can't handle deadlock situation, since the need to back up from a deadlock scenario is very undesirable for autonomous driving).

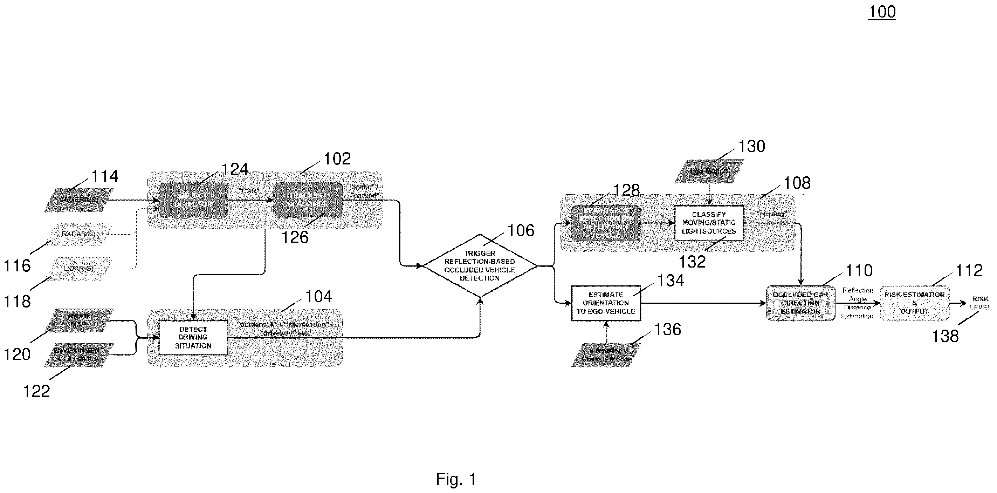

Fig. 1 shows an illustration 100 of a system according to various embodiments for detecting occluded vehicles based on headlight reflections, for example on parked vehicles, according to various embodiments.

A block 102 for detection of parked vehicles may include an object detector 124 and a tracker and/or classifier 126. The object detector 124 may receive input data from a camera 114 and/ or one or more radars 116 and/ or one or more lidars 118, and may detect objects. If the object detector 124 detects a car, output data of the object detector 124 may be provided to the tracker and/ or classifier 126. The tracker and/ or classifier 126 may determine whether the detected car is a static car (in other words: a parked car). Output of the block 102 for detection of parked vehicles may be provided to a block 104 for identification of suitable situations and to a decision block 106.

According to various embodiments, to be able to interpret reflections in parked vehicles, the latter may be detected with suitable sensors. As sensors, for example RADAR sensors, LiDAR sensors, and/ or camera sensors, the latter both stereoscopic and monoscopic, or any combination of these sensors may be used. RADAR sensors may have the benefit of deriving a single-frame velocity. LiDAR may offer especially precise distance and orientation information. Camera sensors may allow for the most precise classification. A fusion of all sensor types may allow for the most reliable and most detailed detections.

To derive reliable information from reflections in these vehicles, according to various embodiments, it may be ensured that these vehicles are not moving but static, parked or currently standing. Movement of the vehicles may interfere with the information transmitted by the reflections from the target vehicles as the reflecting car motion influences the light reflections independently of the target vehicle. Therefore, after detection of a vehicle, it may be classified between moving and standing. If RADAR sensors are used, the RADAR sensors may deliver the strongest signal because RADAR sensors may estimate the object's velocity making use of Doppler-shift signals. LiDAR and camera sensors may determine the velocity of an object by comparing two or more sensor frames with each other.

Another available information source for the task of classifying between standing/moving cars may be the localization and orientation of the object in an available HD (high definition)-map. Vehicles perpendicular to the street orientation are likely to leave an entry or exit of a backyard or vehicles with an angle to the road are potentially leaving a parking spot.

The block 104 for identification of suitable situations may detect a driving situation as a bottleneck or an intersection or a driveway or any other situation of a set of pre-defined situations. Input to the block 104 for identification of suitable situations may include a road map 120 and/ or output of an environment classifier 122. Output of the block 104 for identification of suitable situations may be provided to the decision block 106.

To reduce workload and false positive notifications, the method according to various embodiments may be applied only in suitable situations. These may be determined based on one or more of the following:
1. Daytime information: For example, the method may be carried only during a suitable daytime and/ or when suitable lighting conditions are present. To evaluate light reflections in parked vehicles' car body, the ambient brightness must be low enough to increase the reflection, and an ambient ratio to a sensible value may be determined.
2. Environment: As the system aims at narrow roads and a sufficient density of parked cars for which a reasonable likelihood is given only in urban environments, information on this feature may be used.
3. Road width: If the road has a sufficient width such that an oncoming car can pass without problems, early information on oncoming cars may be of little value. Only if the road width is too narrow for two cars to pass without risk, and potentially one vehicle must give priority to the other vehicle, the method according to various methods may carried out.
4. Restrictions on visibility: if the road curves, the sight on oncoming vehicles may be reduced and information on not yet visible vehicles may provide an improvement in safety. If on the other hand the road is straight, the visible range may be increased and oncoming vehicles can be seen on a sufficiently distance without carrying out the method according to various embodiments.

According to various embodiments, the method for object detection may be carried out for intersections. Even if the roads themselves are straight, crossing roads may be blocked from sight by buildings or parked cars.

To identify situations in which the method according to various embodiments shall be activated, one or more of the following information sources may be used:
A. lighting / daytime. This information source may be obtained by light condition sensors as used to automatically switch headlights. A present camera module may substitute this sensor.
B. Road map. This map may deliver information on the shape of the host vehicle's road, straight or curved, and information on whether intersecting roads / intersections are present. Positions of sight obstructing elements may be part of the map (for example including buildings, trees, hill slopes). Moreover, the map may deliver information on the host vehicle's environment.
C. RADAR/LiDAR/Camera based environment classifier. Based on any of these sensors, a machine learning trained classifier may deliver the same environment class instead of a map-based information.
D. List of detected cars from block 102 for detection of parked vehicles. The distribution of the parked cars may deliver information on the shape of the road, specifically if the line of sight is obstructed.

A lighting condition, under which the method according to various embodiments is to be carried out, may be determined based on information source A as described above.

An environment class condition, for which the method according to various embodiments is to be carried out, may be determined based on the information source B or C as described above.

A road width condition, under which the method according to various embodiments is to be carried out, may be determined based on a combination of information sources B and D as described above, as even a sufficiently wide road can leave only lane for one vehicle.

A visibility range condition, under which the method according to various embodiments is to be carried out, may be determined based on information source B and D as described above. For each road on the map, lane center lanes may be available. A line-of-sight construction along these road lanes may determine the current visible range. Only if the range is below a given threshold, the visibility range condition is met.

According to various embodiments, if the combination of all four conditions (lighting condition, environment class condition, road width condition, visibility range condition) is met, the method according to various embodiments may be activated.

The decision block 106 may, based on its input data, trigger a reflection-based occluded vehicle detection, which may include operations carried out by a bright spot detection/ classification block 108 and an orientation estimation block 134.

The decision block 106 may carry out the decision about, and trigger for, subsequent processing steps. Given that the processing in block 102 for detection of parked vehicles detected stationary vehicles and the situation classification in block 104 for identification of suitable situations found the current surroundings to be suitable for further processing, operations in the following blocks (bright spot detection/ classification block 108 and block 110 for direction estimation) may be triggered.

The bright spot detection/ classification block 108 may include a detector 128 for bright spot detection on a reflecting vehicle, and a classifier 132 for classification of moving/ static light sources. The detector 128 may provide its output to the classifier 132. The classifier 132 may receive information on ego-motion 130 as further input, and may provide its output to the block 110 for direction estimation.

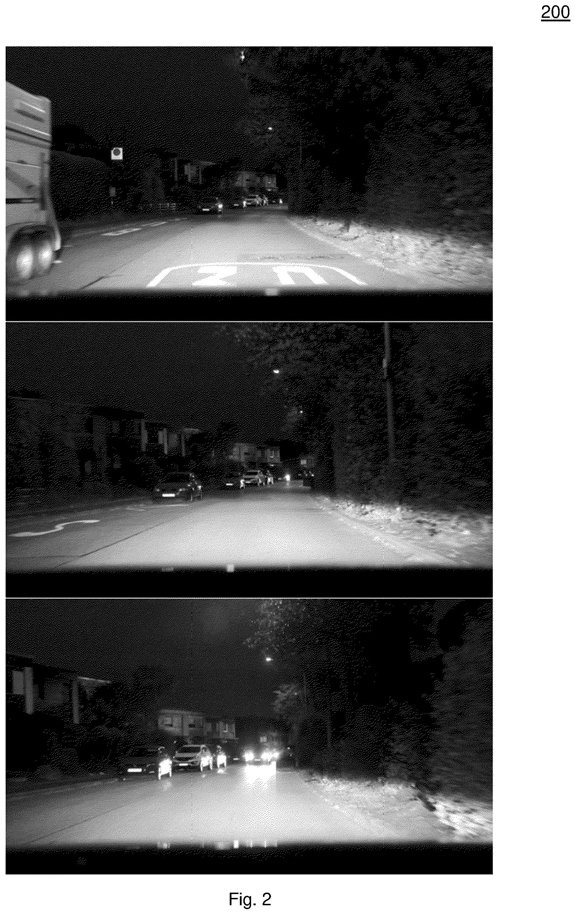

According to various embodiments, reflecting light spots on the static car may be detected. Headlight reflections of oncoming vehicles on parked vehicles bodies are significantly stronger than other typical urban light sources (like illustrated in Fig. 2 below). The detected orientation of the parked car relative to the road may be captured as it contains information on the expected reflection strength and position on the parked car body and may be used to reduce the false positive rate further.

According to various embodiments, existing tracks may be updated using detections and host data (for example ego-motion and/ or yaw rate).

According to various embodiments, new tracks may be created if a detection did not match to any existing track.

According to various embodiments, each light source track may be classified into whether it is moving or static.

According to various embodiments, the track-likelihood of a reflected headlight may be integrated.

The orientation estimation block 134 may receive as an input a simplified chassis model 136, and may provide its output to the block 110 for direction estimation.

The block 110 for direction estimation may estimate a direction of an occluded car, and may provide as outputs a reflection angle and a distance estimation to a block 112 for risk estimation and output.

Given the output of the bright spot detection/ classification block 108 and estimated orientation of the reflecting vehicle(s), the block 110 for direction estimation may estimate the angle of reflection, direction of travel, as well as the distance of an oncoming vehicle within some confidence bounds.

The block 112 for risk estimation and output may provide a risk level 138 as output.

Given the output of the block for direction estimation 110, the likelihood of an occluded oncoming vehicle entering the planned trajectory for the ego-vehicle may be estimated in situations like e.g. a bottleneck, intersection or one-lane-tunnel.

Using this information, a risk level estimation 138 may be send out to be used by planning algorithms to potentially adjust the automated driving behavior of the ego vehicle accordingly or to provide a warning to the driver of the ego vehicle.

Fig. 2 shows an illustration 200 of a scene depicting an example for a bottleneck situation. Headlight reflections of an occluded oncoming vehicle are already clearly visible seconds before even the bottleneck itself becomes visible (top) and remain visible throughout (mid, bottom). Fig. 2 gives an example of a scenario where an obstacle is placed on the road in a residential area and headlight reflections on parked cars can be observed well before the oncoming traffic, or the bottleneck itself for that matter, become visible.

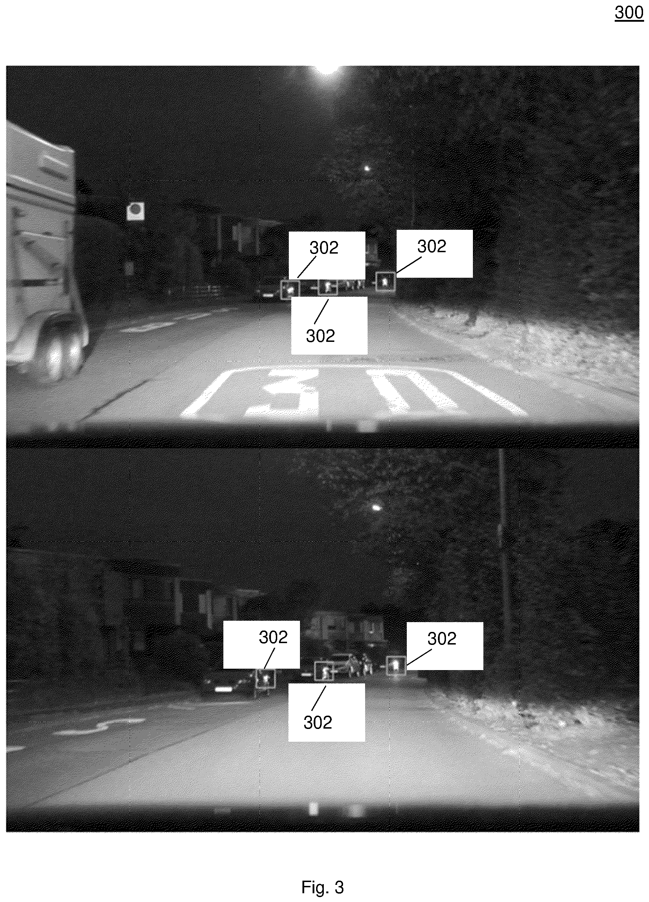

Fig. 3 shows an illustration 300 of an output of a bright spot detector/ tracker (illustrated by boxes 302) on the same scene as shown in Fig. 2, showing robust detection of the reflections of the headlights of the occluded oncoming car.

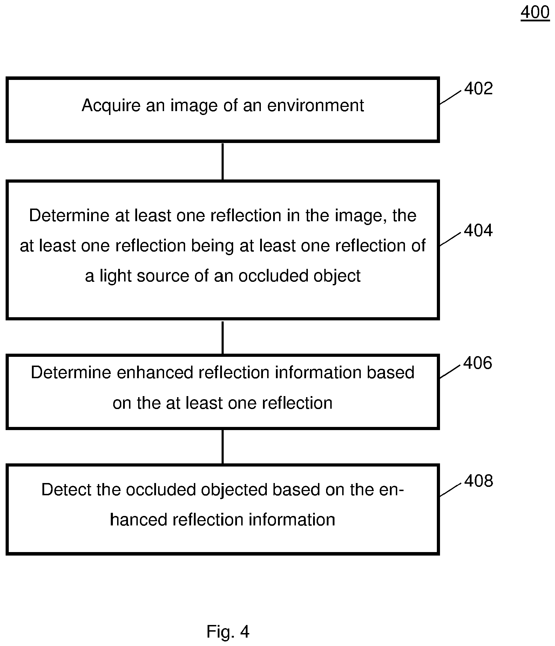

Fig. 4 shows a flow diagram 400 illustrating a method for object detection according to various embodiments. In 402, an image of an environment may be acquired. In 404, at least one reflection in the image may be determined, the at least one reflection being at least one reflection of a light source of an occluded object. In 406, enhanced reflection information may be determined based on the at least one reflection. In 408, the occluded objected may be detected based on the enhanced reflection information.

According to various embodiments, the enhanced reflection information may include or may be a pattern of a plurality of reflections, and wherein the occluded object is detected based on the pattern.

According to various embodiments, the enhanced reflection information may include or may be information on a change of the reflection over time, and wherein the occluded object is detected based on the change.

According to various embodiments, the method may further include: detecting a visible object in the environment; and determining whether the visible object is a static object; wherein the at least one reflection may include or may be at least one reflection on the determined visible object if it is determined that the visible object is a static object.

According to various embodiments, determining whether the visible object is a static object may include or may be determining an image of the visible object and/ or Lidar measurements related to the visible object and/ or radar measurements related to the visible object.

According to various embodiments, determining whether the visible object is a static object may include or may be determining an orientation of the visible object.

According to various embodiments, the method may further include: determining situation information; determining whether the computer implemented method is to be carried out based on the situation information; and carrying out the computer implemented method only if it is determined that the computer implemented method is to be carried out.

According to various embodiments, the situation information may include or may be at least one of a daytime information, an environment traffic situation, a road width information, or a visibility information.

According to various embodiments, the method may further include: determining tracking information of the at least one reflection; wherein the enhanced reflection information may be determined based on the tracking information.

According to various embodiments, the method may be carried out in relation to an ego-vehicle, and the method may further include: outputting a warning to a driver of the ego-vehicle based on detecting the occluded object; or influencing a planning algorithm of an autonomous driving function of the ego-vehicle to reduce the risk of collision with the occluded object.

According to various embodiments, detecting the occluded object may include or may be determining at least one of a distance of the occluded object, a velocity of the occluded object, or a direction of movement of the occluded object.

According to various embodiments, the method may be carried out in relation to an ego-vehicle, and the method may further include: determining a risk of collision between the ego-vehicle and the occluded object based on detecting the occluded object.

Each of the steps 402, 404, 406, 408 and the further steps described above may be performed by computer hardware components.

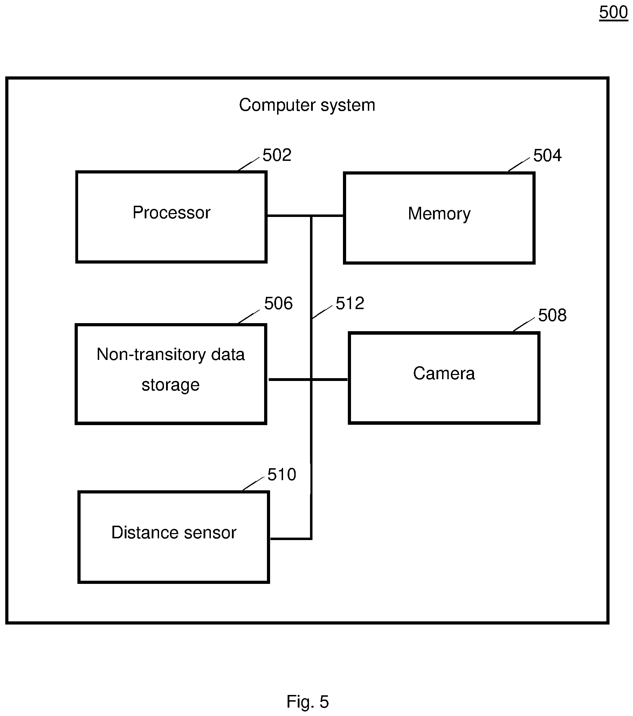

Fig. 5 shows a computer system 500 with a plurality of computer hardware components configured to carry out steps of a computer implemented method for object detection according to various embodiments. The computer system 500 may include a processor 502, a memory 504, and a non-transitory data storage 506. A camera 508 and/or a distance sensor 510 (for example a radar sensor and/ or a Lidar sensor) may be provided as part of the computer system 500 (like illustrated in Fig. 5), or may be provided external to the computer system 500.

The processor 502 may carry out instructions provided in the memory 504. The non-transitory data storage 506 may store a computer program, including the instructions that may be transferred to the memory 504 and then executed by the processor 502. The camera 508 may be used for acquiring the image of the environment. The distance sensor 510 may be used to determine whether the visible object is a static object.

The processor 502, the memory 504, and the non-transitory data storage 506 may be coupled with each other, e.g. via an electrical connection 512, such as e.g. a cable or a computer bus or via any other suitable electrical connection to exchange electrical signals. The camera 508 and/or the distance sensor 510 may be coupled to the computer system 500, for example via an external interface, or may be provided as parts of the computer system (in other words: internal to the computer system, for example coupled via the electrical connection 512).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 500.

### Reference numeral list

- 100: illustration of a system according to various embodiments for detecting occluded vehicles based on headlight reflections according to various embodiments
- 102: block for detection of parked vehicles
- 104: block for identification of suitable situations
- 106: decision block
- 108: bright spot detection/ classification block
- 110: block for direction estimation
- 112: block for risk estimation and output
- 114: camera
- 116: one or more radars
- 118: one or more lidars
- 120: road map
- 122: environment classifier
- 124: object detector
- 126: tracker and/or classifier
- 128: detector
- 130: ego-motion
- 132: classifier
- 134: orientation estimation block
- 136: simplified chassis model
- 138: risk level

- 200: illustration of a scene depicting an example for a bottleneck situation

- 300: an illustration of an output of a bright spot detector/tracker on the same scene as shown in Fig. 2
- 302: box illustrating output of a bright spot detector/tracker
- 400: flow diagram illustrating a method for object detection according to various embodiments
- 402: step of acquiring an image of an environment
- 404: step of determining at least one reflection in the image, the at least one reflection being at least one reflection of a light source of an occluded object
- 406: step of determining enhanced reflection information based on the at least one reflection
- 408: step of detecting the occluded objected based on the enhanced reflection information

- 500: computer system according to various embodiments
- 502: processor
- 504: memory
- 506: non-transitory data storage
- 508: camera
- 510: distance sensor
- 512: connection

## Claims

1. Computer implemented method for object detection,
the method comprising the following steps carried out by computer hardware components:
- acquiring (402) an image of an environment;
- determining (404) at least one reflection in the image, the at least one reflection being at least one reflection of a light source of an occluded object;
- determining (406) enhanced reflection information based on the at least one reflection; and
- detecting (408) the occluded objected based on the enhanced reflection information.

2. The computer implemented method of claim 1,
wherein the enhanced reflection information comprises a pattern of a plurality of reflections, and wherein the occluded object is detected based on the pattern.

3. The computer implemented method of at least one of claims 1 to 2,
wherein the enhanced reflection information comprises information on a change of the reflection over time, and wherein the occluded object is detected based on the change.

4. The computer implemented method of at least one of claims 1 to 3, further comprising the following steps carried out by the computer hardware components:
detecting a visible object in the environment; and
determining whether the visible object is a static object;
wherein the at least one reflection comprises at least one reflection on the determined visible object if it is determined that the visible object is a static object.

5. The computer implemented method of claim 4,
wherein determining whether the visible object is a static object comprises determining an image of the visible object and/ or Lidar measurements related to the visible object and/ or radar measurements related to the visible object.

6. The computer implemented method of at least one of claims 4 or 5,
wherein determining whether the visible object is a static object comprises determining an orientation of the visible object.

7. The computer implemented method of at least one of claims 1 to 6, further comprising the following steps carried out by the computer hardware components:
determining situation information;
determining whether the computer implemented method is to be carried out based on the situation information; and
carrying out the computer implemented method only if it is determined that the computer implemented method is to be carried out.

8. The computer implemented method of claim 7,
wherein the situation information comprises at least one of a daytime information, an environment traffic situation, a road width information, or a visibility information.

9. The computer implemented method of at least one of claims 1 to 8, further comprising the following steps carried out by the computer hardware components:
determining tracking information of the at least one reflection;
wherein the enhanced reflection information is determined based on the tracking information.

10. The computer implemented method of at least one of claims 1 to 9, wherein the method is carried out in relation to an ego-vehicle, the method further comprising at least one of the following steps carried out by the computer hardware components:
outputting a warning to a driver of the ego-vehicle based on detecting the occluded object; or
influencing a planning algorithm of an autonomous driving function of the ego-vehicle to reduce the risk of collision with the occluded object.

11. The computer implemented method of at least one of claims 1 to 10,
wherein detecting (408) the occluded object comprises determining at least one of a distance of the occluded object, a velocity of the occluded object, or a direction of movement of the occluded object.

12. The computer implemented method of at least one of claims 1 to 11,
wherein the method is carried out in relation to an ego-vehicle, the method further comprising the following step carried out by the computer hardware components:
determining a risk of collision between the ego-vehicle and the occluded object based on detecting the occluded object.

13. Computer system (500), the computer system (500) comprising a plurality of computer hardware components configured to carry out the computer implemented method of at least one of claims 1 to 12.

14. Vehicle comprising the computer system (500) of claim 13 and a sensor (508) configured to acquire the image.

15. Non-transitory computer readable medium comprising instructions for carrying out the computer implemented method of at least one of claims 1 to 12.
